# EUROPEAN PATENT SPECIFICATION

(11) **EP 4 193 058 B1**
(45) Date of publication and mention of the grant of the patent: **09.10.2024**
(21) Application number: 21745381.0
(22) Date of filing: 05.07.2021
(51) Int. Cl.: F03D 3/04

(54) **WIND CHANNELLING AND DIRECTING STRUCTURES**
STRUKTUREN ZUR KANALISIERUNG UND LENKUNG DES WINDES
STRUCTURES DE CANALISATION ET DE DIRECTION DU VENT

(30) Priority: 06.08.2020 GB 202012220
(43) Date of publication of application: 14.06.2023
(73) Proprietor: Joshi, Piyush Vasantrai, Leicester, Leicestershire LE4 6BE (GB)
(72) Inventor: Joshi, Piyush Vasantrai, Leicester, Leicestershire LE4 6BE (GB)
(74) Representative: Serjeants LLP
(86) International application number: PCT/GB2021/051697
(87) International publication number: WO 2022/029401

(56) References cited:
- GB-A- 1 519 878
- GB-A- 2 484 329
- SE-C2- 521 060
- US-A- 2 254 892
- US-A- 244 831
- US-A- 250 806
- US-A1- 2005 104 379
- US-A1- 2008 272 603
- US-B2- 8 192 138

## Description

### Technical Field

The present invention relates to structures for channelling and directing incident wind.

### Background Art

GB 1519878 discloses a structure for channelling and directing incident windthat includes a hollow pipe having a downstream end that defines at least one outlet, and an upstream end. A rotatably mounted intake is at the upstream end of the pipe and is adapted to direct incident wind into the pipe. The intake includes an opening through which incident wind enters the intake. The intake also includes a louvre assembly positioned in front of the opening. The louvre assembly includes a plurality of individual slats that are pivotally mounted and adapted to be pivoted between a fully open position and a closed position.

US 2254892, US 244831 and US 250806 disclose louvre assemblies that include a plurality of individual slats that are pivotally mounted and adapted to be pivoted between a fully open position and a closed position. An adjustment mechanism is provided for adjusting the angle of the slats and includes a pivotally mounted, flat wind resistance plate whose angle varies with wind speed. Another example of prior art solutions is available in document US 2008/272603 A1.

### Summary of the Invention

The present invention provides a structure for channelling and directing incident wind according to claim 1.

The intake may include an internal structure that directs the wind from the opening towards the upstream end of the pipe.

The opening may have any suitable shape, e.g., it may be substantially circular, oval, rectangular or triangular. The intake itself may have any suitable shape and configuration.

The opening may be formed in an angled front part of the intake, i.e., the part which faces into the wind in use.

The intake may be rotatably mounted about a vertical axis.

The intake may be rotatably mounted relative to the fixed or stationary pipe by any suitable means such as a bearing. The intake may be driven to rotate by sensing wind direction and rotating the intake using an actuator such as an electric motor (sometimes called a "yaw motor") that is controlled by a suitable controller so that the intake opening faces the wind direction. A wind sensor may be provided to measure wind direction for this purpose. The wind sensor may also measure wind speed for adjusting the angle of the slats of a louvre assembly - see below. The intake may also comprise a directional vane (or fin) that enables the incident wind to rotate the intake so that the intake opening faces the wind direction. The directional vane may have any suitable shape.

A louvre assembly is used to control the amount of incident wind that is permitted to enter the intake opening, and hence the amount of incident wind that is directed to the upstream end of the pipe. It will be understood that it may be necessary to limit or restrict the amount of wind entering the intake to avoid damaging the structure and any equipment located downstream of the outlet(s).

The louvre assembly includes a plurality of individual slats that are pivotally mounted so that their angle is adjusted by a suitable adjustment mechanism. The individual slats may be adjusted by pivoting them in the same direction or by pivoting adjacent slats in the opposite direction. The ends of each slat may be pivotally mounted in a support or frame, which may be integral with the intake. The adjustment mechanism may be configured to pivot one of the slats if the slats are connected together in such a way - either directly or indirectly - that allows all of the slats to be pivoted in unison.

The slats may be pivoted between a closed position where the slats lie substantially in the same plane and will often overlap slightly to form a closed barrier to prevent wind from entering the intake, and a fully open position where the slats define a plurality of open channels therebetween to allow substantially all of the incident wind to enter the intake. The louvre assembly, and in particular the slats, may cover substantially all, or just part, of the intake opening.

The angle of the slats may be adjusted based on wind speed - e.g., so that the slats are fully open when the wind speed is below a lower threshold and are closed when the wind speed is above an upper threshold. When the wind speed is greater than the lower threshold but less than the upper threshold, the slats may be adjusted gradually from the fully open position towards the closed position with increasing wind speed and *vice versa.* In one arrangement, the lower threshold and the upper threshold may be substantially the same so that the slats are adjusted from being fully open to being closed and *vice versa* - optionally with some "hysteresis" to prevent continual and rapid opening and closing of the slats when the wind speed is around the threshold level.

The angle of the slats is adjusted mechanically based on the wind speed using a wind resistance plate as a mechanical actuator, for example. The adjustment mechanism includes a pivotally mounted wind resistance plate whose angle varies with wind speed. (It will be readily understood that wind force is proportional to wind speed - consequently, a higher wind speed will equate to a greater wind force acting on the wind resistance plate and *vice versa*.) The wind resistance plate may be mounted below the louvre assembly and the intake opening. The pivoting movement of the wind resistance plate may be used to adjust the angle of the slats and the adjustment mechanism may include a suitable linkage such as a lever arm mechanism or a gearing mechanism for that purpose. The wind resistance plate is biased towards a first position where the slats are in the fully open position, and the wind resistance plate may be pivoted towards a second position by the wind force applied by the incident wind. In the second position, the slats of the louvre assembly are in the closed position. The wind resistance plate may be biased towards the first position by a spring or other suitable biasing means, for example. The biasing means may form part of the louvre assembly, e.g., the adjustment mechanism. It will be readily understood that the spring or other suitable biasing means will apply a biasing force to the wind resistance plate - either directly or indirectly through the adjustment mechanism, for example - that opposes the wind force that acts on the wind resistance plate. Consequently, the wind resistance plate will only be pivoted towards the second position if the wind force acting on the wind resistance plate exceeds the biasing force.

The wind resistance plate is substantially L-shaped. The wind resistance plate is designed so that the incident wind impinges on a first (or substantially vertical) part of the L-shaped wind resistance plate. The incident wind will pivot the first part of the wind resistance plate backwards to a second position where the slats are in the closed position. Incident wind that impinges on the first part of the wind resistance plate is guided along a second (or substantially horizontal) part of the plate - and is directed in the opposite direction to the wind direction (i.e., back towards the incident wind). In general terms, the incident wind that impinges on the first part of the wind resistance plate is directed away from the intake by the second part. Incident wind that impinges on the closed slats may also be directed downwardly towards the L-shaped wind resistance plate - for example, if the louvre assembly is angled to follow the angled front part of the intake - and then directed in the opposite direction to the wind direction. If the wind speed falls below the upper threshold, the wind resistance plate may pivot back to the first position where the slats are fully open under the action of the biasing force. The interior angle between the first and second parts of the L-shaped wind resistance plate may be between about 60 and about 120 degrees, for example.

The upstream end of the pipe may be substantially vertical and may be designed to rotatably mount the intake. The downstream end of the pipe may be substantially vertical or horizontal - i.e., so that in the latter case the pipe has a change of direction with a curved part. The pipe may have any suitable cross-section, but a substantially circular cross-section will generally be preferred.

The pipe may be formed of any suitable rigid material.

The pipe may be formed from a plurality of individual pipe sections. The pipe sections may be mechanically connected together - e.g., using outwardly extending connecting flanges which receive mechanical fixings such as bolts. As noted above, the pipe sections may be straight or curved, for example.

The pipe sections may have different internal diameters (or cross-sectional areas). For example, a pipe section located at or near the upstream end of the pipe may have a larger internal diameter (or cross-sectional area) than a pipe section located at or near the downstream end of the pipe. In this way, the internal diameter (or cross-sectional area) of the pipe may be narrowed gradually along the direction from the upstream end to the downstream end that defines the outlet(s). Narrowing the internal diameter (or cross-sectional area) of the pipe results in an increase in the wind velocity through the pipe in the downstream direction towards the outlet(s) and in a corresponding reduction in pressure.

Each pipe section may have the same internal diameter (or cross-sectional area) throughout its axial extent, or the internal diameter (or cross-sectional area) may vary - preferably the internal diameter (or cross-sectional area) will decrease in the downstream direction. Pipe sections may be connected together by intermediate sections (or couplers) which may, in particular, be used to connect straight pipe sections having different but non-varying internal diameters (or cross-sectional areas). The intermediate sections may have a frusto-conical inner surface (or sloping or angled inner surface(s)) to channel (or "funnel") the wind from one pipe section to another. The wind velocity may increase within the intermediate sections. The intermediate sections and the pipe sections may be mechanically connected together - e.g., using outwardly extending flanges which receive mechanical fixings such as bolts.

At least part of the pipe (e.g., one or more pipe sections) may include an internal helical flange or an internal helical groove (or "rifling" groove) to promote helical movement of the wind through the pipe. It is believed that promoting such helical movement, where the wind has both a linear and rotational component of movement from the upstream end of the pipe toward the downstream end, will reduce the turbulence within the hollow pipe and will help to move the incident wind through the pipe as efficiently as possible. It may also help to remove any particulates, debris or liquid droplets that are entrained in the wind, and in particular where the rotational effect of the wind can be used to expel the particulates, debris or liquid droplets through openings or slots in the pipe - see below. The pipe may include a plurality of separate helical flanges. Each flange may extend substantially perpendicular to the inner surface of the pipe and may be welded to the inner surface, for example. Each flange may have the same width throughout its helical extent, or the width may vary - preferably the width will increase in the downstream direction. (In other words, the flange may extend further into the hollow interior of the pipe at the downstream end of the flange than it does at the upstream end of the flange.) An internal helical flange may be omitted in some parts of the pipe, e.g., in any intermediate sections (or couplers) or any curved parts of the pipe. If a helical groove is provided, it may typically be in a downstream part of the pipe such as in the pipe section that defines the outlet, for example.

The vertical part of the pipe may be supported by a frame or support structure.

The pipe may include openings or slots through which any entrained particulates, debris or liquid droplets (and a small quantity of wind) may be ejected. If the pipe includes a change of direction, the openings or slots may be positioned in the curved part of the pipe. The openings or slots may in particular be positioned in the radially outer part of the curved part of the pipe. Openings or slots may also be provided in one or more of the straight pipe sections.

If the pipe includes an internal helical flange, the openings or slots in the pipe may be aligned with the helical channel defined by the internal helical flange. But it will be understood that the openings or slots may have any suitable alignment.

The structure may include at least one filter screen to prevent larger particulates and debris from entering the pipe. The filter screen may be located at the upstream end of the pipe or in the intake, for example.

The downstream end of the pipe may be divided to define two or more outlets.

The structure may form part of a wind turbine, for example. In particular, the wind turbine may further include a turbine assembly positioned at the outlet of the structure and adapted to be rotated by the wind exiting the outlet. The pipe may be positioned to channel and direct the wind on to the turbine assembly. The wind turbine may further include a rotating electrical machine (e.g., a generator) including a rotor and a stator, where the rotor is adapted to be driven to rotate by the turbine assembly to generate electricity. The turbine assembly and the rotating electrical machine may be conveniently located at low level as opposed to being housed in a nacelle or casing on the top of a tower as would normally be the case for a conventional wind turbine.

The structure may form part of a ventilation or cooling system, for example.

### Drawings

Figure 1 is a side view of a structure according to the present invention;
Figure 2 is a perspective view of the intake of the structure of Figure 1;
Figure 3 is a side view of the intake of Figure 2 with the wind resistance plate in a first position and the slats of the louvre assembly in an open position;
Figure 4 is a front view of the intake of Figure 3;
Figure 5 is a side view of the intake of Figure 2 with the wind resistance plate in a second position and the slats of the louvre assembly in a closed position;
Figure 6 is a front view of the intake of Figure 5;
Figure 7 is a perspective view of an alternative intake;
Figure 8 is a front view of the alternative intake of Figure 7;
Figure 9 is a side view of a straight pipe section;
Figure 10 is a cross-section view of the straight pipe section of Figure 9;
Figure 11 is a perspective view of the straight pipe section of Figures 9 and 10;
Figure 12 is a side view of a coupler;
Figure 13 is a cross-section view the coupler of Figure 12;
Figure 14 is a perspective view of a curved pipe section; and
Figure 15 is a perspective view of part of a straight pipe section showing slots.

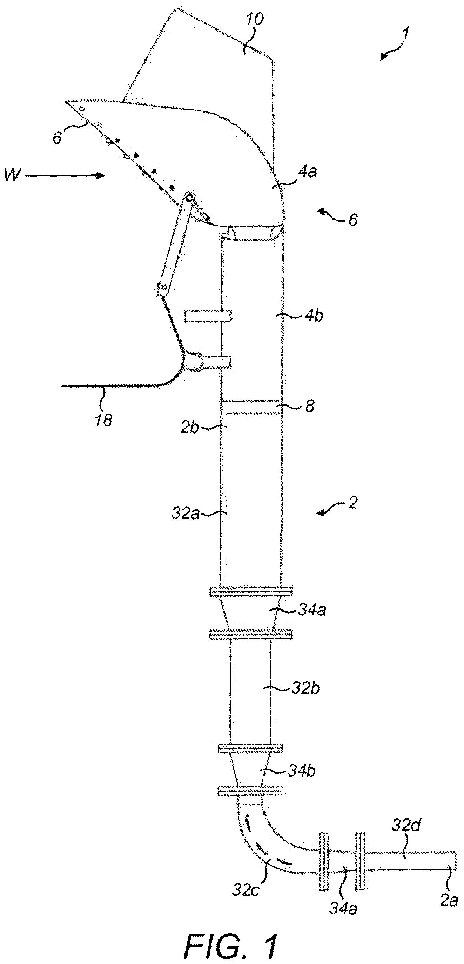

With reference to Figure 1, the present invention provides a structure 1 for channelling and directing incident wind comprising a hollow pipe 2 and an intake 4.

The pipe 2 has a downstream end 2a that defines an outlet, and an upstream end 2b.

The intake 4 is rotatably mounted at the upstream end 2b of the pipe and is adapted to direct incident wind (which is indicated by arrows labelled "W" in the Figures) into the pipe 2. The intake 4 includes a "head" part 4a and a "neck" part 4b that is formed as a hollow vertical pipe.

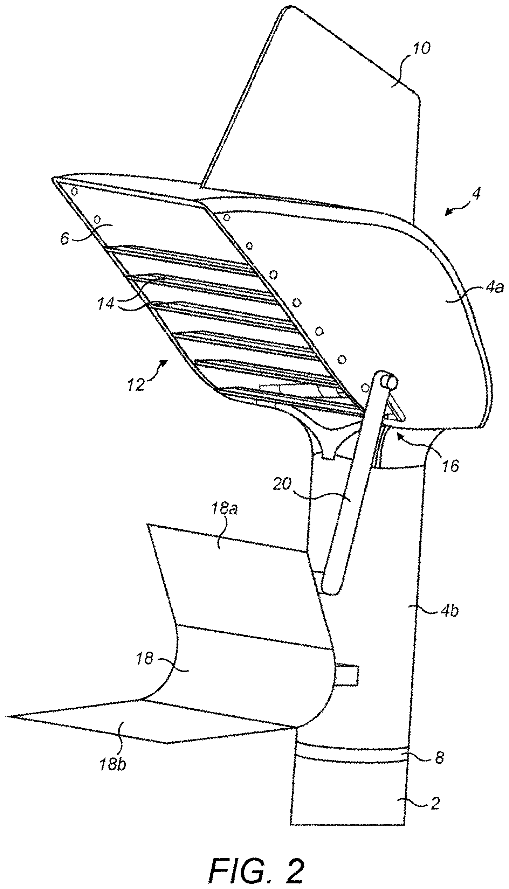

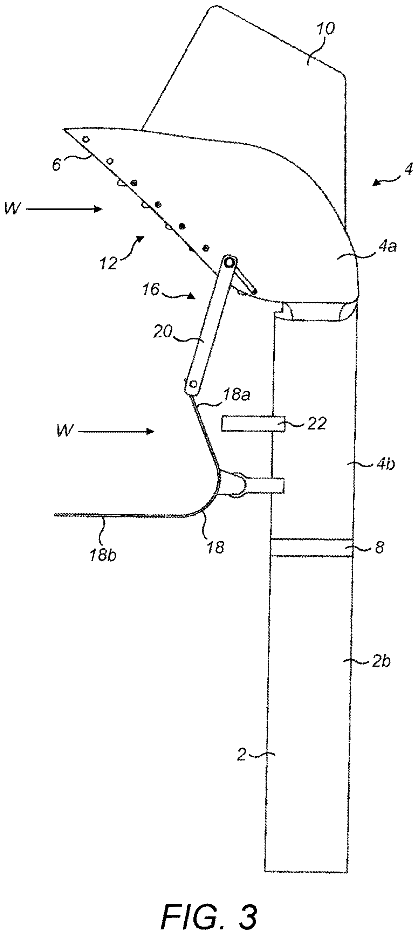

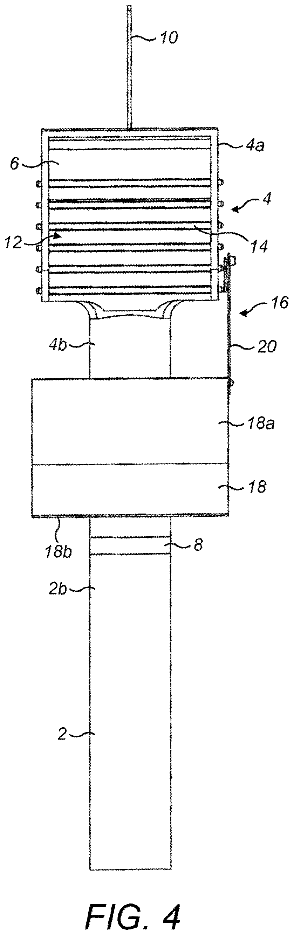

With reference to Figures 2 to 6, the head part 4a of the intake 4 includes a housing that defines an opening or vent 6 through which incident wind enters the intake, and an internal structure that directs the wind from the opening into the neck part 4b and towards the upstream end 2b of the pipe 2. The opening 6 shown in Figures 2 to 6 is substantially rectangular, but it will be understood that it may have any suitable shape. The opening 6 is formed in an angled front part of the head part 4a as shown. The upper part of the head part 4a of the intake 4 therefore overhangs the louvre assembly 12 - see below - to protect it and help prevent rain from entering the neck part 4b.

The intake 4 is rotatably mounted about a vertical axis.

The neck part 4b of the intake 4 is rotatably mounted relative to the pipe 2 by a bearing 8.

A directional vane 10 is formed on an upper part of the head part 4a of the intake 4. The directional vane 10 enables the incident wind to rotate the intake 4 so that the angled front part and the opening 6 faces the wind direction. More particularly, if the wind direction changes, the wind force acting on the directional vane 10 will cause the intake 4 to rotate to face the incident wind. It will be understood that the intake may also be driven to rotate by sensing wind direction (e.g., using wind sensor) and rotating the intake using an actuator such as an electric motor that is controlled by a suitable controller.

A louvre assembly 12 is used to control the amount of incident wind that is permitted to enter the intake opening 6, and hence the amount of incident wind that is directed by the intake 4 to the upstream end 2b of the pipe 2. The louvre assembly 12 includes a plurality of individual slats 14 that are pivotally mounted so that their angle may be adjusted by an adjustment mechanism 16. The ends of each slat 14 are pivotally mounted in a support or frame formed by opposite side parts of the head part 4a of the intake 4.

The slats 14 are pivoted between a closed position where the slats lie substantially in the same plane and overlap slightly to form a closed and angled barrier to prevent wind from entering the intake 4, and a fully open position where the slats define a plurality of open channels therebetween to allow substantially all of the incident wind to enter the intake. In the louvre assembly 12 shown in Figures 2 to 6, the slats 14 do not cover all of the intake opening 6 so some incident wind will enter the intake 4 even when the slats are in the closed position. But it will be understood that the slats can be arranged to cover substantially all of the intake opening so that almost no incident wind enters the intake when the slats are in the closed position.

The angle of the slats 14 is adjusted based on wind speed - e.g., so that the slats are fully open when the wind speed is below a lower threshold and are closed when the wind speed is above an upper threshold. The angle of the slats 14 is adjusted mechanically based on the wind speed using a L-shaped wind resistance plate 18 that forms part of the adjustment mechanism 16. The wind resistance plate 18 is pivotally mounted on the neck part 4b of the intake 4 by a mounting bracket. The wind resistance plate 18 is positioned below the louvre assembly 12 and the intake opening 6 and its angle relative to the intake varies with wind speed. In particular, the wind resistance plate 18 is designed so that the incident wind impinges on a first (or substantially vertical) part 18a of the plate. The wind force acting on the wind resistance plate 18 may pivot the first part 18a of the plate backwards to the second position where the slats 14 are in the closed position. Consequently, incident wind can be prevented from entering the intake 4 if the wind speed exceeds the upper threshold at which the structure or any downstream components might be damaged.

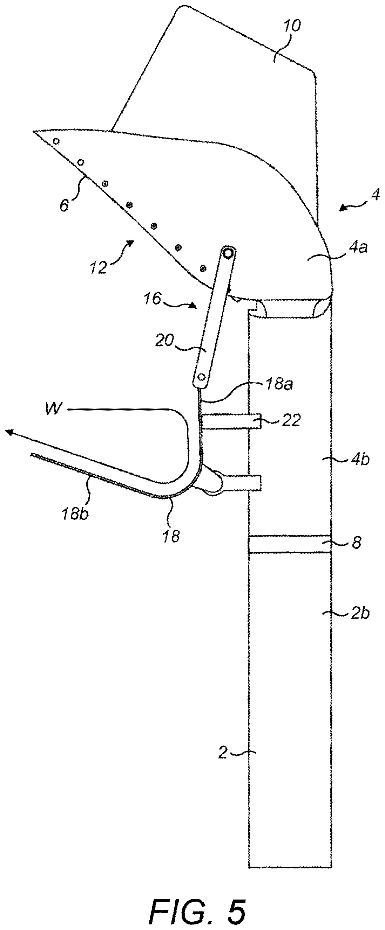

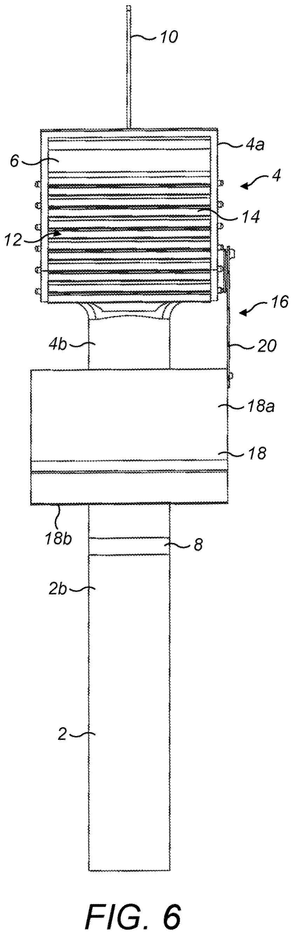

The pivoting movement of the wind resistance plate 18 is used to adjust the angle of the slats 14 and the adjustment mechanism 16 includes a lever arm mechanism 20 for translating the pivoting movement of the plate to the slats. The lever arm mechanism 20 is connected between the wind resistance plate 18 and the lowest slat as shown. The slats 14 are connected together such that they pivot in unison with the lowest slat. The wind resistance plate 18 is biased towards a first position shown in Figures 2, 3 and 4 where the slats 14 are in the fully open position. The wind resistance plate 18 may be pivoted towards the second position depending on the speed of the incident wind and hence the wind force that acts on the first part 18a of the plate. In the second position shown in Figures 5 and 6, the slats 14 of the louvre assembly 12 are in the closed position. Further pivoting movement of the wind resistance plate 18 is prevented by a stop 22 on the neck part 4b of the intake 4 that is most clearly seen in Figure 5.

The wind resistance plate 18 is biased towards the first position by a spring or other suitable biasing means. In the intake 4 shown in Figures 2 to 6, the biasing means is integrated with the slats 14, but other suitable biasing means would include a spring connected between a second (or substantially horizontal) part 18b of the wind resistance plate and the neck part of the intake, or a biasing means that it is integrated with the mounting bracket that pivotally connects the wind resistance plate to the neck part of the intake or integrated with the adjustment mechanism, for example. The biasing means applies a biasing force to the wind resistance plate 18 that opposes the wind force that acts on the first part 18a of the plate. The biasing force ensures that the default position for the wind resistance plate 18 is the first position where the slats 14 are open to allow incident wind to enter the intake 4.

Incident wind that impinges on the first part 18a of the wind resistance plate 18 may be guided along the second part 18b of the plate - and is preferably directed in the opposite direction to the wind direction, i.e., back towards the incident wind.

Incident wind that impinges on the closed slats 14 may also be directed downwardly towards the L-shaped wind resistance plate 18 and then directed in the opposite direction to the wind direction. If the wind speed falls, the wind resistance plate 18 may pivot back to the first position where the slats 14 are fully open under the biasing force applied by the biasing means.

The interior angle between the first and second parts 18a, 18b of the L-shaped wind resistance plate 18 may be between about 60 and about 120 degrees, for example.

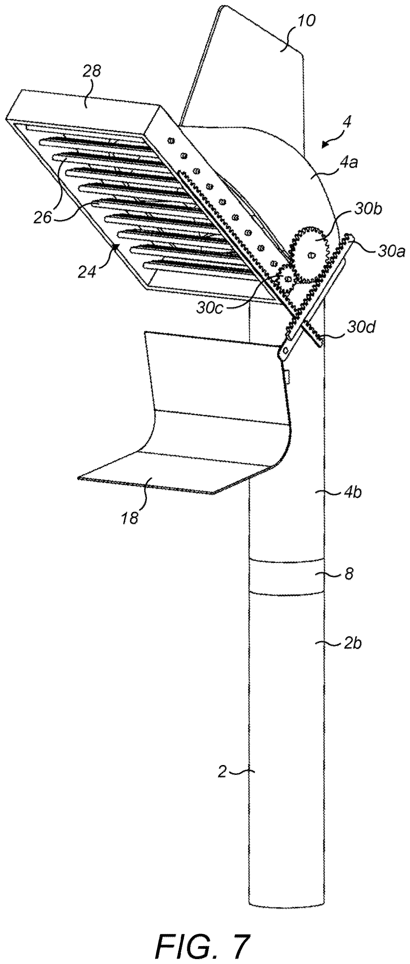

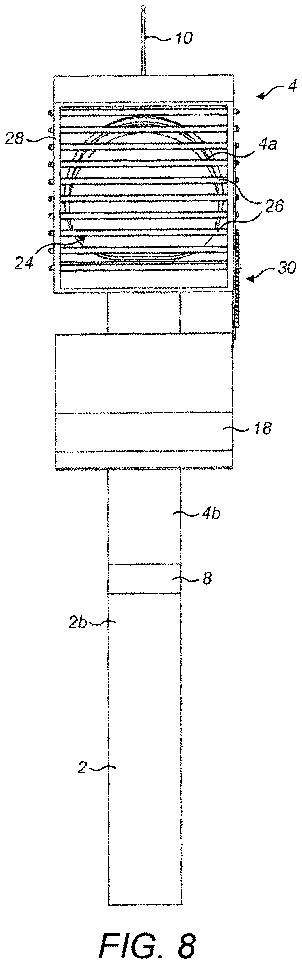

In the alternative louvre assembly 24 shown in Figures 7 and 8, the slats 26 are mounted in a separate rectangular frame 28 that is positioned in front of the intake opening. The adjustment mechanism includes a gearing mechanism 30 to translate the pivoting movement of the L-shaped wind resistance plate 18 to the slats 26. The gearing mechanism 30 includes a first rack 30a, a first pinion gear 30b and a second pinion gear 30c. The first pinion gear 30b is driven to rotate by the lateral movement of the first rack 30a. The second pinion gear 30c is driven to rotate by the first pinion gear 30b and causes the lowest slat to pivot in response to the pivoting movement of the wind resistance plate 18. A second rack 30d is shown and can be used to drive additional pinion gears (not shown) that cause the other slats 26 to pivot in unison with the lowest slat.

The upstream end 2b of the pipe 2 is vertical and is designed to rotatably mount the intake 4 by means of the bearing 8.

The downstream end 2a of the pipe 2 is horizontal.

The pipe 2 is formed from a plurality of individual pipe sections 32a, 32b, ..., 32d as shown in Figure 1. It will be understood that the arrangement of pipe sections in Figure 1 is just for the purposes of illustrating the structure of the present invention and that any suitable number and arrangement of pipe sections may be used.

The pipe sections 32a, 32b and 32d are straight pipe sections. Pipe section 32c is a curved pipe section.

The pipe sections 32a, 32b, ..., 32d have different internal diameters. In particular, the pipe section 32a at the upstream end 2b of the pipe 2 has a larger internal diameter than the pipe section 32b, the pipe section 32b has a larger internal diameter than the pipe section 32c, and so on. In this way, the diameter of the pipe 2 is narrowed gradually along the direction from the upstream end 2b to the downstream end 2a that defines the outlet. Narrowing the internal diameter of the pipe 2 results in an increase in the wind velocity through the pipe in the downstream direction towards the outlet and in a corresponding reduction in pressure.

The pipe sections 32a, 32b, ..., 32d are connected together by couplers 34a, 34b and 34c. The couplers 34a, 34b and 34c have a frusto-conical inner surface to channel (or "funnel") the wind from one pipe section to another. The pipe sections 32a, 32b, ..., 34d and the couplers 34a, 34b and 34c are mechanically connected together by respective outwardly extending connecting flanges which receive mechanical fixings such as bolts. More particularly, adjacent connecting flanges are positioned in abutment and bolts are passed through aligned openings 48 in the respective connecting flanges to secure the pipe section and the coupler together. The connecting flanges can also be used to connect pipe sections together in the same manner without an interposing coupler.

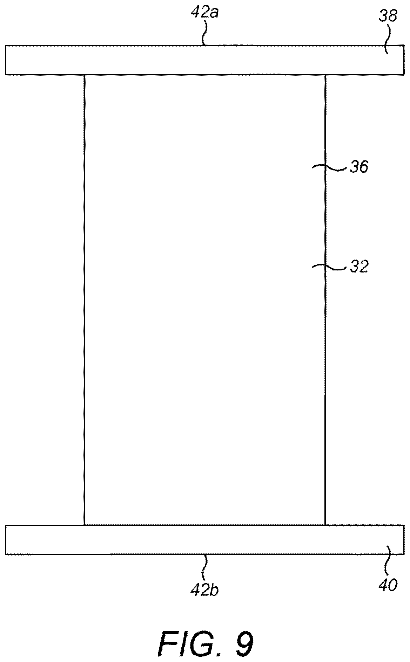

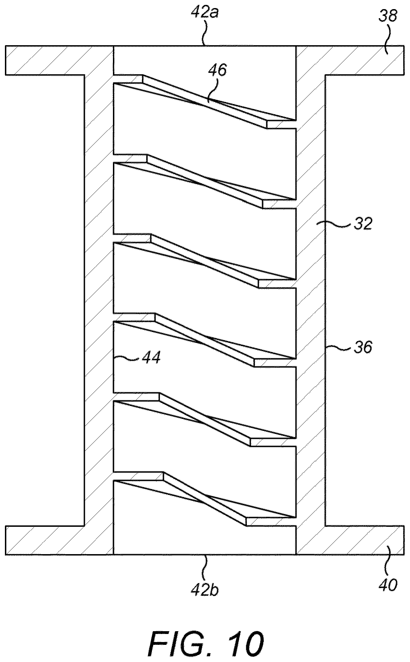

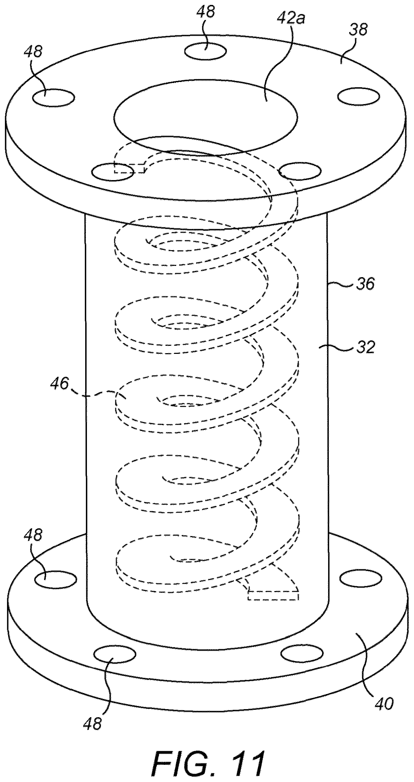

With reference to Figures 9 to 11, a straight pipe section 32 includes a cylindrical outer surface 36, a first connecting flange 38, and a second connecting flange 40. The straight pipe section 32 has an upstream end 42a and a downstream end 42b. Each connecting flange includes a plurality of spaced openings 48 for receiving the bolts. The pipe section 32 includes a cylindrical inner surface 44. An internal helical flange 46 extends substantially perpendicular to the cylindrical inner surface 44 of the pipe section 32 and may be welded to the inner cylindrical surface, for example. The width of the internal helical flange 46 increases in the downstream direction, i.e., from the upstream end 42a towards the downstream end 42b. (In other words, the internal helical flange 46 extends further into the hollow interior of the pipe section at the downstream end of the flange than it does at the upstream end of the flange.) The internal helical flange 46 promotes helical movement of the wind through the pipe. It is believed that promoting such helical movement, where the wind has both a linear and rotational component of movement from the upstream end of the pipe toward the downstream end, will reduce the turbulence within the hollow pipe 2 and will help to move the incident wind through the pipe as efficiently as possible. It may also help to remove any particulates, debris or liquid droplets that are entrained in the wind, and in particular where the rotational effect of the wind can be used to expel the particulates, debris or liquid droplets through openings or slots in the pipe - see below.

The internal helical flange may be omitted in some pipe sections, e.g., the curved pipe section 32c.

The downstream pipe section 32d that defines the outlet may be provided with a helical groove (or "rifling" groove) in its cylindrical inner surface instead of an internal helical flange.

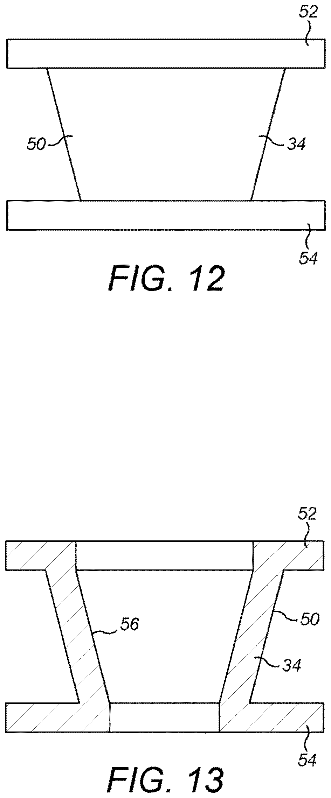

With reference to Figures 12 and 13, a coupler 34 includes a frusto-conical outer surface 50, a first connecting flange 52, and a second connecting flange 54. Each connecting flange includes a plurality of spaced openings for receiving the bolts. The coupler 34 includes a frusto-conical inner surface 56.

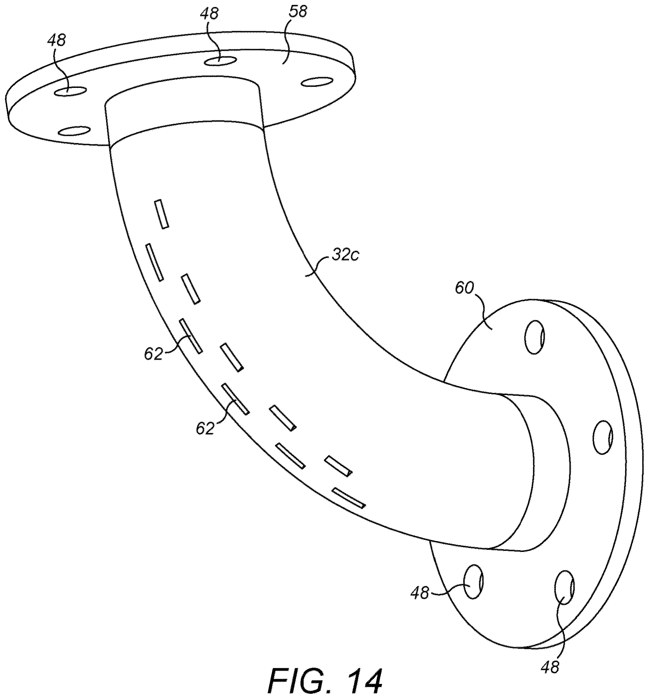

As mentioned briefly above, the pipe 2 may include openings or slots through which any entrained particulates, debris or liquid droplets (and a small quantity of wind) may be ejected. Figure 14 shows the curved pipe section 32c with a first connecting flange 58 and a second connecting flange 60. Openings or slots 62 are provided in the radially outer part of the curved pipe section 32c through which the particulates, debris or liquid droplets may be expelled from the pipe.

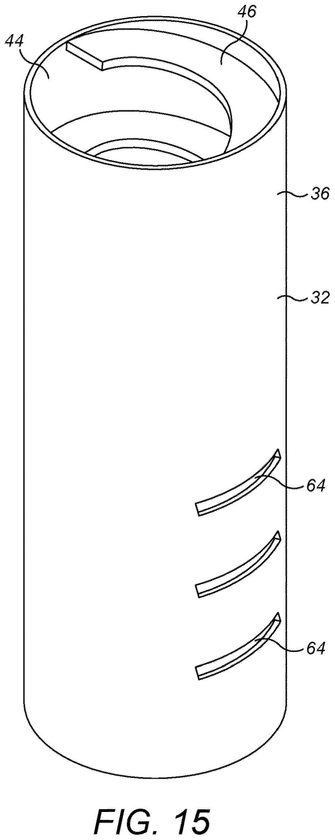

If the pipe section includes an internal helical flange, the openings or slots in the pipe section may be aligned with the helical channel defined by the internal helical flange. This is shown in Figure 15 where the openings or slots 64 in the straight pipe section 32 are angled and are aligned with the internal helical channel.

Although not shown, the pipe 2 may be positioned to channel and direct the incident wind on to a turbine assembly or a ventilation or cooling system positioned at the outlet.

## Claims

1. A structure (1) for channelling and directing incident wind comprising:
a hollow pipe (2) having a downstream end (2a) that defines at least one outlet, and an upstream end (2b); and
a rotatably mounted intake (4) at the upstream end of the pipe (2b) adapted to direct incident wind into the pipe (2);
wherein the intake (4) includes an opening (6) through which incident wind enters the intake (4);
wherein the intake (4) further comprises a louvre assembly (12) positioned in front of the opening (6), wherein the louvre assembly (12) comprises:
a plurality of individual slats (14) that are pivotally mounted and adapted to be pivoted between a fully open position and a closed position; and
an adjustment mechanism (16) for adjusting the angle of the slats (14) and which includes a pivotally mounted wind resistance plate (18) whose angle varies with wind speed;
wherein the wind resistance plate (18) is biased towards a first position where the slats (14) are in the fully open position, and is pivotable towards a second position by the incident wind where the slats (14) are in the closed position; and
wherein the wind resistance plate (18) is substantially L-shaped and includes a first part (18a) on which the incident wind impinges and a second part (18b) that is adapted to direct the incident wind away from the intake (4) and in the opposite direction to the incident wind direction.

2. A structure (1) according to claim 1, wherein the angle between the first and second parts (18a, 18b) of the wind resistance plate (18) is between about 60 and about 120 degrees.

3. A structure (1) according to claim 1 or claim 2, wherein the intake (4) includes an internal structure that directs the wind from the opening (6) towards the upstream end (2b) of the pipe (2).

4. A structure (1) according to any preceding claim, wherein the opening (6) is formed in an angled front surface of the intake (4).

5. A structure (1) according to any preceding claim, wherein the intake (4) is rotatably mounted about a vertical axis.

6. A structure according to any preceding claim, wherein the intake further comprises an actuator that is adapted to drive the intake to rotate relative to the pipe based on a wind direction or a directional vane (10).

7. A structure (1) according to any preceding claim, wherein the upstream end (2b) of the pipe (2) is substantially vertical, and the downstream end (2a) of the pipe (2) is substantially vertical or horizontal.

8. A structure (1) according to any preceding claim, wherein the pipe (2) is formed from a plurality of pipe sections (32a, 32b, ..., 32d).

9. A structure (1) according to claim 8, wherein the pipe sections (32a, 32b, ..., 32d) have different internal diameters or cross-sectional areas.

10. A structure (1) according to claim 9, wherein pipe sections (32a, 32b, ..., 32d) with different internal diameters or cross-sectional areas are connected together by intermediate sections (34a, 34b, 34c) with a frusto-conical inner surface or one or more angled or sloping inner surfaces.

11. A structure (1) according to any preceding claim, wherein the structure (1) defines a downstream direction extending from the upstream end (2a) of the pipe (2) to the downstream end (2b) of the pipe (2), and wherein at least part of the pipe (2) includes an internal helical flange (46) having a width that increases in the downstream direction.

12. A structure (1) according to any preceding claim, wherein the pipe (2) includes one or more openings or slots (62, 64).

## Patentansprüche

1. Struktur (1) zum Kanalisieren und Lenken von einfallendem Wind, umfassend:
ein hohles Rohr (2), das ein stromabwärtiges Ende (2a), das mindestens einen Auslass definiert, und ein stromaufwärtiges Ende (2b) aufweist; und
einen drehbar montierten Einlass (4) am stromaufwärtigen Ende des Rohrs (2b), der dazu angepasst ist, einfallenden Wind in das Rohr (2) zu lenken;
wobei der Einlass (4) eine Öffnung (6) einschließt, durch die einfallender Wind in den Einlass (4) eintritt;
wobei der Einlass (4) weiter eine Lamellenanordnung (12) umfasst, die vor der Öffnung (6) positioniert ist, wobei die Lamellenanordnung (12) Folgendes umfasst:
eine Vielzahl einzelner Lamellen (14), die schwenkbar montiert sind und angepasst sind, um zwischen einer vollständig geöffneten Position und einer geschlossenen Position geschwenkt zu werden; und
einen Anpassungsmechanismus (16) zum Anpassen des Winkels der Lamellen (14), und der eine schwenkbar montierte Windwiderstandsplatte (18) einschließt, deren Winkel sich mit der Windgeschwindigkeit ändert;
wobei die Windwiderstandsplatte (18) in Richtung einer ersten Position vorgespannt ist, in der sich die Lamellen (14) in der vollständig geöffneten Position befinden, und durch den einfallenden Wind in Richtung einer zweiten Position schwenkbar ist, in der sich die Lamellen (14) in der geschlossenen Position befinden; und
wobei die Windwiderstandsplatte (18) im Wesentlichen L-förmig ist und einen ersten Teil (18a) einschließt, auf den der einfallende Wind auftrifft, und einen zweiten Teil (18b), der dazu angepasst ist, den einfallenden Wind vom Einlass (4) weg und in die entgegengesetzte Richtung zur Richtung des einfallenden Windes zu lenken.

2. Struktur (1) nach Anspruch 1, wobei der Winkel zwischen dem ersten und zweiten Teil (18a, 18b) der Windwiderstandsplatte (18) zwischen etwa 60 und etwa 120 Grad beträgt.

3. Struktur (1) nach Anspruch 1 oder Anspruch 2, wobei der Einlass (4) eine innere Struktur einschließt, die den Wind von der Öffnung (6) zum stromaufwärtigen Ende (2b) des Rohrs (2) lenkt.

4. Struktur (1) nach einem vorstehenden Anspruch, wobei die Öffnung (6) in einer abgewinkelten Vorderfläche des Einlasses (4) gebildet ist.

5. Struktur (1) nach einem vorstehenden Anspruch, wobei der Einlass (4) um eine vertikale Achse drehbar montiert ist.

6. Struktur nach einem vorstehenden Anspruch, wobei der Einlass weiter eine Betätigungsvorrichtung umfasst, die dazu angepasst ist, den Einlass basierend auf einer Windrichtung oder einer Richtungsfahne (10) so anzutreiben, dass er sich in Bezug auf das Rohr dreht.

7. Struktur (1) nach einem vorstehenden Anspruch, wobei das stromaufwärtige Ende (2b) des Rohrs (2) im Wesentlichen vertikal ist und das stromabwärtige Ende (2a) des Rohrs (2) im Wesentlichen vertikal oder horizontal ist.

8. Struktur (1) nach einem vorstehenden Anspruch, wobei das Rohr (2) aus einer Vielzahl von Rohrabschnitten (32a, 32b, ..., 32d) gebildet ist.

9. Struktur (1) nach Anspruch 8, wobei die Rohrabschnitte (32a, 32b, ..., 32d) unterschiedliche Innendurchmesser oder Querschnittsflächen aufweisen.

10. Struktur (1) nach Anspruch 9, wobei Rohrabschnitte (32a, 32b, ..., 32d) mit unterschiedlichen Innendurchmessern oder Querschnittsflächen durch Zwischenabschnitte (34a, 34b, 34c) mit einer kegelstumpfförmigen Innenfläche oder einer oder mehreren abgewinkelten oder schrägen Innenflächen miteinander verbunden sind.

11. Struktur (1) nach einem vorstehenden Anspruch, wobei die Struktur (1) eine stromabwärtige Richtung definiert, die sich vom stromaufwärtigen Ende (2a) des Rohrs (2) zum stromabwärtigen Ende (2b) des Rohrs (2) erstreckt, und wobei mindestens ein Teil des Rohrs (2) einen inneren spiralförmigen Flansch (46) einschließt, der eine Breite aufweist, die in der stromabwärtigen Richtung zunimmt.

12. Struktur (1) nach einem vorstehenden Anspruch, wobei das Rohr (2) eine oder mehrere Öffnungen oder Schlitze (62, 64) einschließt.

## Revendications

1. Structure (1) destinée à canaliser et à diriger le vent incident comprenant :
un tuyau creux (2) présentant une extrémité aval (2a) qui définit au moins une sortie, et une extrémité amont (2b) ; et
une admission montée rotative (4) à l'extrémité amont du tuyau (2b) adaptée pour diriger le vent incident dans le tuyau (2) ;
dans lequel l'admission (4) inclut une ouverture (6) à travers laquelle le vent incident pénètre dans l'admission (4) ;
dans lequel l'admission (4) comprend en outre un ensemble de persiennes (12) positionné devant l'ouverture (6), dans laquelle l'ensemble de persiennes (12) comprend :
une pluralité de lattes individuelles (14) qui sont montées de manière pivotante et adaptées pour pivoter entre une position complètement ouverte et une position fermée ; et
un mécanisme de réglage (16) pour régler l'angle des lattes (14) et qui inclut une plaque de résistance au vent montée de manière pivotante (18) dont l'angle varie avec la vitesse du vent ;
dans laquelle la plaque de résistance au vent (18) est sollicitée vers une première position où les lattes (14) sont en position complètement ouverte, et peut pivoter vers une seconde position sous l'effet du vent incident où les lattes (14) sont en position fermée ; et
dans laquelle la plaque de résistance au vent (18) est sensiblement en forme de L et inclut une première partie (18a) sur laquelle le vent incident frappe et une seconde partie (18b) qui est adaptée pour diriger le vent incident à l'écart de l'admission (4) et dans la direction opposée à la direction du vent incident.

2. Structure (1) selon la revendication 1, dans laquelle l'angle entre les première et seconde parties (18a, 18b) de la plaque de résistance au vent (18) est compris entre environ 60 et environ 120 degrés.

3. Structure (1) selon la revendication 1 ou 2, dans laquelle l'admission (4) inclut une structure interne qui dirige le vent depuis l'ouverture (6) vers l'extrémité amont (2b) du tuyau (2).

4. Structure (1) selon une quelconque revendication précédente, dans laquelle l'ouverture (6) est formée dans une surface avant inclinée de l'admission (4).

5. Structure (1) selon une quelconque revendication précédente, dans laquelle l'admission (4) est montée de manière rotative autour d'un axe vertical.

6. Structure selon une quelconque revendication précédente, dans laquelle l'admission comprend en outre un actionneur qui est adapté pour entraîner l'admission en rotation par rapport au tuyau en fonction d'une direction du vent ou d'une aube directionnelle (10).

7. Structure (1) selon une quelconque revendication précédente, dans laquelle l'extrémité amont (2b) du tuyau (2) est sensiblement verticale, et l'extrémité aval (2a) du tuyau (2) est sensiblement verticale ou horizontale.

8. Structure (1) selon une quelconque revendication précédente, dans laquelle le tuyau (2) est formé d'une pluralité de sections de tuyau (32a, 32b, ..., 32d).

9. Structure (1) selon la revendication 8, dans laquelle les sections de tuyau (32a, 32b, ..., 32d) présentent des diamètres internes ou des sections transversales différents.

10. Structure (1) selon la revendication 9, dans laquelle des sections de tuyau (32a, 32b, ..., 32d) présentant des diamètres internes ou des sections transversales différents sont reliées entre elles par des sections intermédiaires (34a, 34b, 34c) ayant une surface interne tronconique ou une ou plusieurs surfaces internes inclinées ou en pente.

11. Structure (1) selon une quelconque revendication précédente, dans laquelle la structure (1) définit une direction aval s'étendant de l'extrémité amont (2a) du tuyau (2) à l'extrémité aval (2b) du tuyau (2), et dans laquelle au moins une partie du tuyau (2) inclut une bride hélicoïdale interne (46) présentant une largeur qui augmente dans la direction aval.

12. Structure (1) selon une quelconque revendication précédente, dans laquelle le tuyau (2) inclut une ou plusieurs ouvertures ou fentes (62, 64).
